# EUROPEAN PATENT APPLICATION

(11) **EP 4 751 857 A1**
(43) Date of publication of application: **03.06.2026**
(21) Application number: 25192639.0
(22) Date of filing: 29.07.2025
(51) Int. Cl.: B25J 9/00, B25J 11/00, B25J 17/02, B23Q 1/36

(54) **ARTICULATED ROBOT ASSEMBLY FOR MACHINING PIECES**

(30) Priority: 29.11.2024 IT 202400027117
(71) Applicant: Martini, Walter, 35010 Borgoricco (PD) (IT)
(72) Inventor: MARTINI, Walter, 35012 Camposampiero (PD) (IT)
(74) Representative: Furlan, Gianmarco

(57) **Abstract**

Articulated robot assembly for machining pieces (100), which comprises a support structure (2), a rotary table (3), which is rotatably mounted on the support structure (2), around a first rotation axis (R), and on which a piece (100) to be machined is intended to be placed.

The assembly further comprises a robot (4), which is provided with a support base, intended to be placed on the ground, and an articulated arm (41), which is mounted on the support base and comprises a main portion (42), mounted in an articulated manner on the support base, a rotatable portion (43), which is rotatably mounted on the main portion (42), around a second rotation axis (T), and a machining tool, mounted on the rotatable portion (43) of the articulated arm (41), and actuatable in rotation in order to machine the piece (100) mounted on the rotary table (3).

The assembly further comprises first compensation means (5), which are mounted on the robot (4), between the main portion (42) and the rotatable portion (43), in order to compensate for the movement of the rotatable portion (43) with respect to the main portion (42) around the second rotation axis (T) and comprise two first reaction elements (51, 52), pliable along a first movement direction (Y), and a first centering element (53), interposed to size abuttingly between the two first reaction elements (51, 52). Wherein the first two first reaction elements (51, 52) are configured to exert a first reaction force (Fr1) on the first centering element (53), predetermined, to maintain it in an initial position, while the first centering element (53) is movable against the first reaction elements (51, 52), which are susceptible to plying along the first movement direction (Y), and are configured to return the first centering element (53) to the initial position.

## Description

### Field of application

The present invention relates to an articulated robot assembly for machining pieces, according to the preamble of independent claim no. 1.

The robot assembly in question can be advantageously used to perform one or more processes, such as milling, deburring or roughing, on a corresponding piece, usually metal, by means of a special tool.

In more detail, the robot assembly in question can be used to machine the piece by means of milling cutters, grinding wheels, planers, etc.

Advantageously, the robot assembly in question can be used to perform the aforesaid processes on large metal pieces.

Therefore, the present invention falls within the industrial sector of the production of industrial automation for mechanical machining, in particular for devices aimed at performing deburring and material removal operations in general.

### State of the art

Following the production of metal components, it is often, if not always, necessary to perform a refinishing step of the piece, in which the produced piece is further machined to obtain a satisfactory final finish.

Such operations are in particular necessary following production processes involving casting, molding, or material removal. For example, following such production processes, the pieces produced require the removal of any residual burrs (an operation known as deburring), just as they often require grinding, polishing, edging, etc. before being subsequently placed on the market.

To this end, there are several machines available on the market that allow automating such refinishing operations, using an automated tool (called numerically controlled), which is configured to receive a digital map of the path to be taken to perform the machining of the piece. In more detail, in such machines the piece to be machined is firmly fixed to a work surface, for example using ad hoc clamping devices, in order to prevent the piece from moving during its machining. Such numerically controlled machines comprise one or more tools (for example, cutters, grinding wheels or abrasive discs and brushes), which are mounted on articulated arms, so that they can be moved in the plane and in space to machine the piece on the work surface, according to a pre-established work program.

In more detail, such machines comprise a logic control unit by means of which an operator sets up a work program by entering spatial coordinates related to the geometry of the piece to determine a path that the tool must follow. The tools are then moved along the aforesaid path, to perform a machining on the piece.

However, such machines have some drawbacks. Firstly, such machines have limited precision due to the dimensional tolerances of the various pieces to be treated.

In more detail, due to the tolerance limits imposed by the known production processes (molding, casting, etc.), the pieces often have an irregular geometry, caused by the different portions of excess material that must be removed during the subsequent roughing step.

Such portions of excess material can be very irregular along the piece to be machined, so that some parts of the piece have a geometry very similar to the ideal one, in which therefore minimal machining of the piece would be necessary, while others have a large amount of material to remove.

This mainly causes two drawbacks. The first drawback lies in the risk of damaging, or at least greatly reducing the useful life of the tool, which passes at the oversized areas of the piece. In fact, if the piece has an oversized portion, which deviates significantly from the theoretical path that the tool must follow during the machining, a high pressure is created between the surface of the piece to be machined and the tool, which in some cases can cause the tool itself to break.

To overcome such a problem, it is often necessary to set up a precautionary theoretical path, which is calibrated on the maximum oversizing of the piece to be machined, so as to gradually perform a machining on such an excess portion, while accepting, however, to not machine the remaining portions of the piece that are not oversized.

In this case, however, while on the one hand the useful life of the tool is preserved, on the other hand it leads to long times required for performing the machining of the piece. In fact, in this case the actual working time increases significantly with respect to the theoretical one, in proportion to the number of passes required to machine the oversized portions of the piece. Furthermore, document FR 2619043 discloses a robot that can be used for grinding or deburring operations, which comprises an articulated arm, which is mounted so that it can rotate with respect to a main portion and can be moved with respect to the latter by means of pneumatic cylinders, so as to regulate the operating pressure of the grinding wheel on the piece to be machined.

In more detail, the articulated arm of the robot comprises a rod that is fixed at one end thereof to several double-acting pneumatic cylinders, placed opposite each other, which are actuatable to move the fixed rod, and therefore the articulated arm of the robot on which the machining tool is mounted. Operationally, such a prior art solution involves using the aforesaid hydraulic cylinders in feedback, that is, controlling them based on signals received from special sensors mounted on the robot arm, which allow the grinding force to be measured and adjusted according to the user's needs.

However, even such a solution has proven to be not without drawbacks in practice. In particular, a first drawback lies in the fact that such a solution is complicated and expensive to produce and use. In fact, such a solution involves the use of double-acting hydraulic cylinders that are controlled in feedback by means of the use of multiple sensors and control logics that are not only complicated, but also not very precise during use.

### Presentation of the invention

In this situation, the problem underlying the present invention is therefore to overcome the drawbacks manifested by the known types of machines for mechanical machining, providing an articulated robot assembly for mechanical machining, which allows machining pieces in a precise and fast manner.

A further object of the present invention is to provide a robot assembly that allows increasing the useful life of the tools, reducing the risk of breakage of the latter.

A further object of the present invention is to provide a robot assembly that allows reducing the time required for the preparation and programming of the work path required for machining pieces.

A further object of the present invention is to provide a robot assembly that is highly automated and that reduces the need to use specialized operators.

A further object of the present invention is to provide a robot assembly that allows machining even very heavy pieces, in particular those weighing more than 100 kg.

A further object of the present invention is to provide a robot assembly that is easy to assemble and maintain.

A further object of the present invention is to provide a robot assembly that is safe and reliable in use.

A further object of the present invention is to provide a robot assembly which is constructively simple and economical to produce.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:

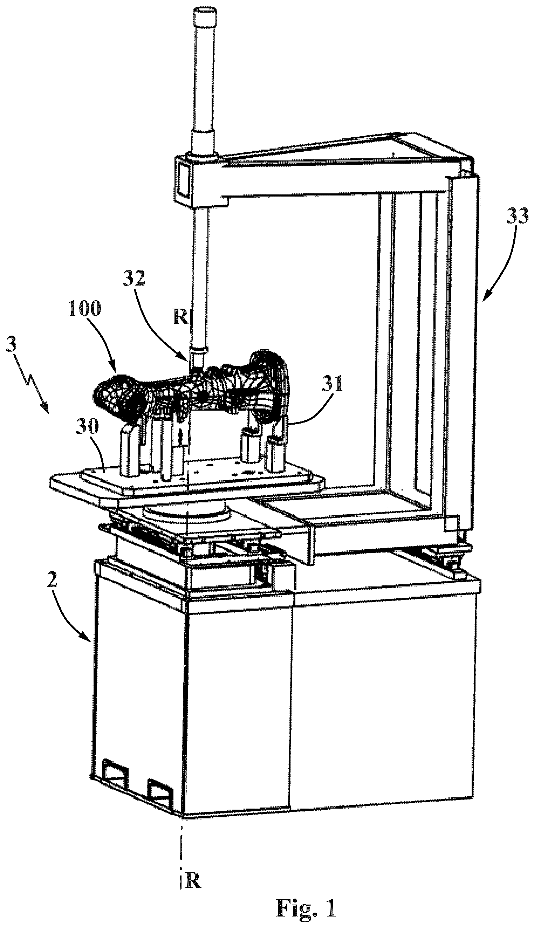

- Figure 1 shows a perspective view of a part of the articulated robot assembly of the present invention, related to a support structure and a rotary table;

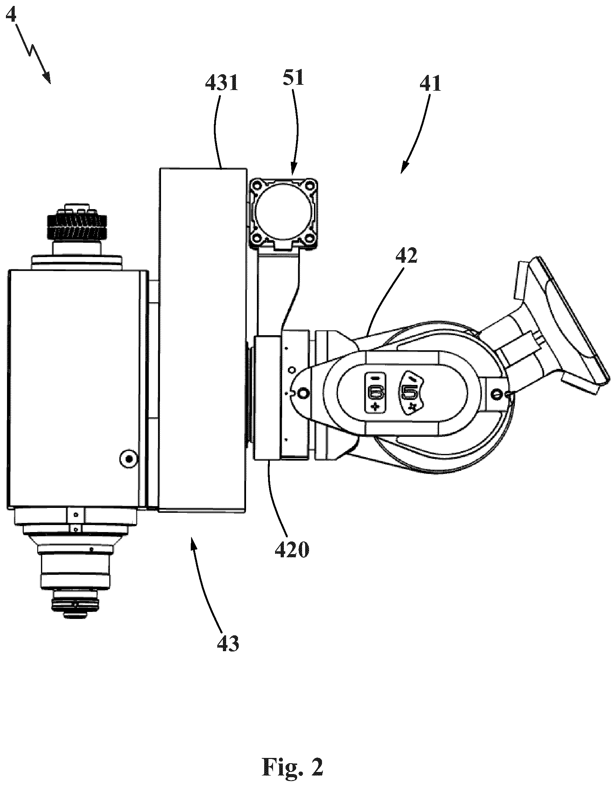

- Figure 2 shows a side view of a further part of the assembly, related to a robot;
- Figure 3 shows a top perspective view of a detail of the robot in Figure 2, related to the first compensation means;
- Figure 4 shows a front view, in section, of the detail of Figure 3;

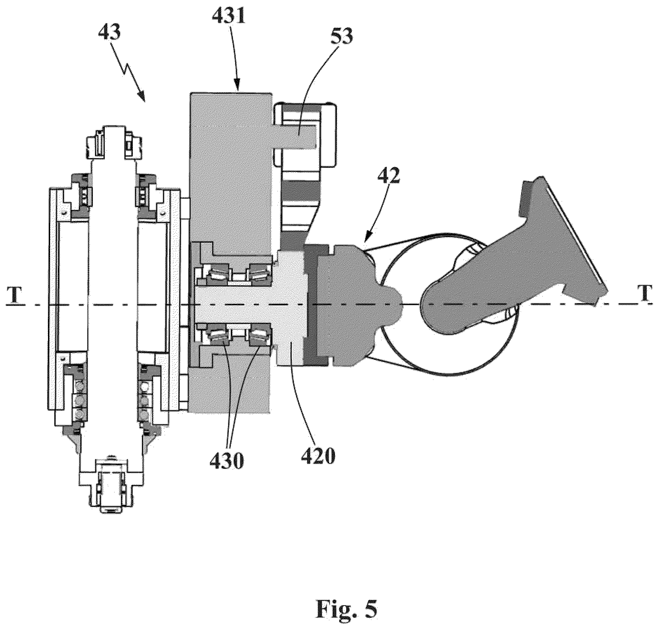

- Figure 5 shows a view in section of the robot of Figure 2;

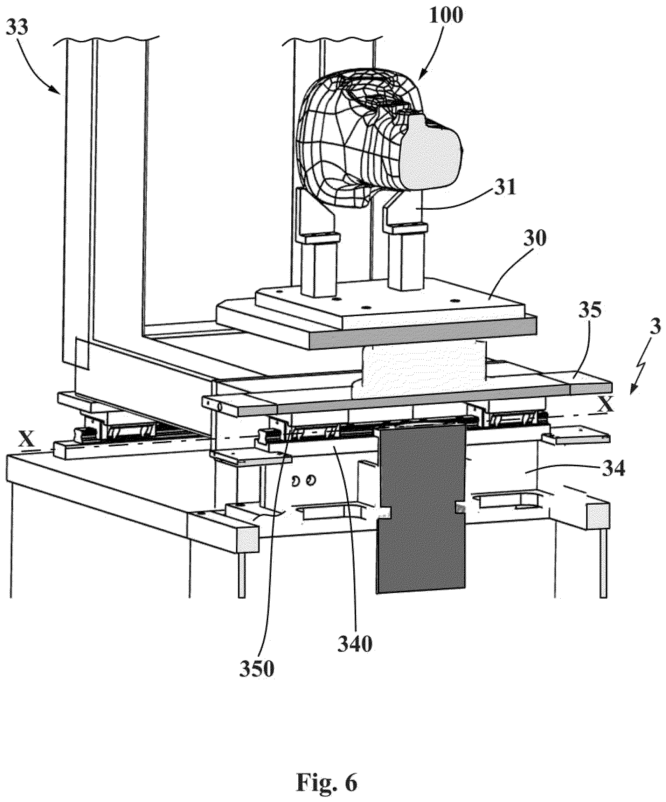

- Figure 6 shows a perspective view, in section, of the part of the assembly of Figure 1;

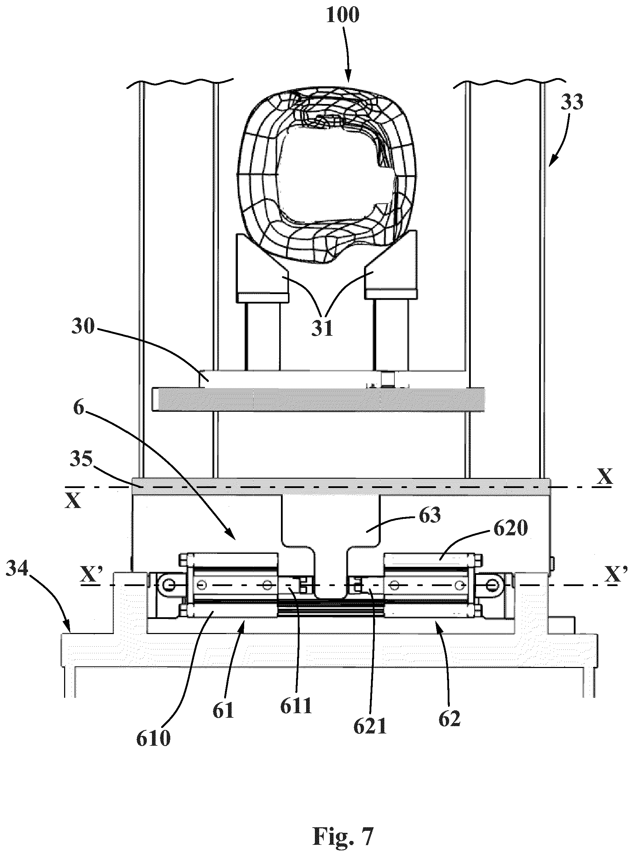

- Figure 7 shows a front view, in section, of the assembly of Figure 6.

### Detailed description of a preferred embodiment

With reference to the attached drawings, the reference numeral 1 indicates as a whole an articulated robot assembly intended to be used for machining pieces 100, in particular metal pieces (for example but not limited to cast iron, steel or aluminum pieces). In more detail, as better discussed below, the assembly 1 can be used to machine large pieces 100 (for example, weighing more than 100 kg) automatically, by means of one or more tools, depending on the mechanical machining required. For example, the machining performed by the assembly can be deburring, roughing, material removal, etc.

In accordance with the invention, the articulated robot assembly 1 comprises a support structure 2, which is preferably of the type with base and intended to be placed resting on the floor.

The assembly 1 further comprises at least one rotary table 3, on which a piece 100 to be machined is intended to be placed. Advantageously, the rotary table 3 is provided with a support surface 30, which is preferably placed horizontally and parallel to the floor.

In particular, the piece 100 can be simply placed resting on the rotary table 3, in particular on the aforesaid support surface 30, or alternatively it can be fixed to the latter by means of clamping devices 31 or other fixing elements, which are mounted on the rotary table 3 and tightened to one or more portions of the piece 100 to be machined, to keep it stably constrained in position on the rotary table 3 during machining.

The aforesaid clamping devices 31 are well known to those skilled in the art, and can vary depending on the geometry and dimensions of the piece, and therefore will not be described in detail in the present discussion.

In particular, the piece 100 is usually simply placed resting on the support surface 30 of the rotary table 3 when it has a weight such as to guarantee its stability (without movement) during machining. Conversely, in the case of lighter pieces 100, which could therefore move during machining, it is preferable to use the aforesaid clamping devices 31.

The attached figures illustrate, for example, but not limited to, a rotary table 3 which comprises several clamping devices 31, which are extended projecting from the support surface 30, and a tailstock 32, which is placed opposite the support surface 30 and the clamping devices 31, so as to prevent the movement of the piece 100 during its movement.

In such a case, advantageously, as visible in the attached figures, the rotary table 3 comprises an auxiliary structure 33, substantially C-shaped, which carries the aforesaid tailstock 32 mounted thereon so that it can be placed above, at a distance with respect to the support surface 30.

The rotary table 3 is rotatably mounted on the support structure 2, and is rotatable around a first rotation axis R, which is preferably substantially vertical.

Advantageously, the assembly 1 comprises first actuation means, not illustrated in the attached figures, which are connected to the rotary table 3, and are configured to cause the latter to rotate around the aforesaid first rotation axis R.

For example, the aforesaid first actuation means are housed within a containment casing of the support structure 2, and are preferably provided with an electric motor provided with a rotor connected to the rotary table 3.

In particular, the rotary table 3 can thereby be actuated in rotation around the aforesaid first rotation axis R, to place it in the desired position during the machining of the piece 100, and in particular to place the portion of the piece 100 to be machined in front of the machining tool, as better discussed below.

The assembly 1 further comprises a robot 4, which is provided with a support base, intended to be placed on the ground, and an articulated arm 41, which is mounted on the support base.

In more detail, the robot 4 is advantageously placed adjacent and close to the rotary table 3, so as to allow the machining of the piece 100 which is placed (resting or fixed) on the same rotary table 3.

In particular, in a manner known per se, the articulated arm 41 is connected to the base in an articulated manner, being free to move around multiple rotation axes and thus determining a wide possibility of movement (in space) of the articulated arm 41 with respect to the fixed base of the robot 4.

To achieve this, robot 4 comprises several mechanical joints and actuation means (hydraulic, pneumatic or electric), which however are also well known to those skilled in the art and will therefore not be discussed below.

In accordance with the idea underlying the present invention, the articulated arm 41 of the robot 4 comprises a main portion 42, mounted in an articulated manner on the support base, and a rotatable portion 43, which is rotatably mounted on the main portion 42, around a second rotation axis T.

Preferably, the rotatable portion 43 is idly mounted on the main portion 42, around the second rotation axis T. In particular, advantageously, the rotatable portion 43 of the robot 4 is connected to the main portion 42 by means of bearings, so as to allow the free, substantially idle, rotation of the rotatable portion 43 with respect to the main portion 42.

In more detail, the main portion 42 is provided with a support shaft 420, on which the rotatable portion 43 of the robot 4 is rotatably mounted. In particular, the rotatable portion 43 comprises at least one bearing 430, and preferably two bearings 430, which is keyed onto the support shaft 420 of the main portion 42, and a support structure 431, which is mounted on the bearing 430 by means of, for example, a mounting bushing.

Obviously, without departing from the scope of protection of the present invention, it is also possible to use other anti-friction elements, in place of the aforesaid bearings 430, for example bronze bearings.

Advantageously, the rotatable portion 43 is rigidly connected to the main portion 42, without prejudice to the possibility of rotating around the second rotation axis T. In other words, the only movement permitted between the rotatable portion 43 and the main portion 42 is preferably that of rotation around the second rotation axis T.

The robot 4 further comprises at least one machining tool, not illustrated in the attached figures, which is mounted on the rotatable portion 43 of the articulated arm 41, and is actuatable in rotation around a third rotation axis Z, for example by means of an independent motor thereof, to machine the piece 10 mounted on the rotary table 3.

Preferably, the tool is mounted on the rotatable portion 43 of the robot by means of an electrospindle, so as to reduce the space and bulk required, without requiring the provision of a separate motor mounted on the rotatable portion 43.

In particular, the machining tool is free to rotate around the third rotation axis Z, while it is integral with the rotatable portion 43 for rotation movements performed around the second rotation axis T.

The assembly 1 further comprises first compensation means 5, which are mounted on the robot 4, are mechanically connected to the main portion 42 and to the rotatable portion 43, to compensate for the movement of the rotatable portion 43 with respect to the main portion 42 around the second rotation axis T.

More clearly, the first compensation means 5 are configured to exert a first reaction force, predetermined, on the rotatable portion 43, so as to keep the aforesaid rotatable portion 43 stopped in position with respect to the main portion 42 during the normal machining of the piece 100. In other words, in such a situation the rotatable portion 43 does not rotate around the second rotation axis T with respect to the main portion 42.

Preferably, the first compensation means 5 are configured to exert a first reaction force Fr1 comprised between 50 and 300 kg, and even more preferably between 100 and 200 kg.

At the same time, the aforesaid compensation means 5 allow a compensatory movement, preferably elastic, of the rotatable portion 43 with respect to the main portion 42 (around the second rotation axis T), if the operating pressure exerted by the surface of the piece 100 on the tool exceeds a threshold pressure, which preferably corresponds to the predetermined force exerted by the first compensation means 5 on the rotatable portion 43. For example, the aforesaid first compensation means 5 allow the movement of the rotatable portion 43 with respect to the main portion 42 when the pressure exceeds the set working pressure, which can be for example comprised between 1 and 6 bar, depending on the machining and the point of the piece 100 to be machined.

In fact, as explained above, the machining tool is integral, in the rotation around the second rotation axis T, with the rotatable portion 43, so that when the tool encounters an oversized portion of material in its predefined machining path (for example in which there is excess material) the tool tends to rotate, together with the rotatable portion 43, around the second rotation axis T.

Such movement is allowed precisely by the first compensation means 5, when the pressure between the surface of the piece 100 and the tool exceeds a threshold value, and therefore when the irregular portion of the piece 100 is actually too large, potentially risking damaging the tool.

Advantageously, the first compensation means 5 comprise two first reaction elements 51, 52, which are mounted on one of the main portion 42 and the rotatable portion 43 of the robot 4, and are placed opposite and spaced apart from each other, and a first centering element 53, fixed to the other of the main portion 42 and the rotatable portion 43 and interposed between the two first reaction elements 51, 52.

Advantageously, in accordance with the preferential embodiment illustrated in the attached figures, the two first reaction elements 51, 52 are mounted on the main portion 42 and the first centering element 53 is fixed to the rotatable portion 43.

Preferably, the first compensation means 5 comprise a support bracket 54, which is fixed to the main portion 42, preferably projecting radially from the support shaft 420, and carries the two first reaction elements 51, 52 mounted thereon, preferably at an upper end thereof.

In particular, the support bracket 54 advantageously comprises two prongs, which are placed spaced from each other and preferably parallel, and in which each prong carries a corresponding first reaction element 51, 52 mounted thereon.

Advantageously, the first centering element 53 is fixed to the support structure 431 of the rotatable portion 43, preferably in a single piece with the latter, and is preferably interposed between the two prongs of the support bracket 54.

The operation of the first compensation means 5 is explained below, with reference to the first embodiment illustrated above. Obviously, the operating principle of the first compensation means 5 is also analogous in the case of a second embodiment (not illustrated) in which the two first reaction elements 51, 52 are mounted on the rotatable portion 43, while the first centering element 53 is fixed to the main portion 42.

Advantageously, the aforesaid first reaction elements 51, 52 are pliable, preferably elastically, along a first movement direction Y following the rotation of the rotatable portion 43 around the second rotation axis T, and are configured to exert a first reaction force Fr1, predetermined, on the first centering element 53, which is preferably oriented parallel to the first movement direction Y.

Preferably, the aforesaid first reaction force Fr1 is preset and remains constant throughout the machining process. In particular, the aforesaid first reaction force Fr1 is preset by an operator based on the piece to be machined and the type of tool, and defines the maximum force that the operator intends to subject to the tool during the machining of the piece 100.

Therefore, the first centering element 53, which is fixed to the rotatable portion 43, will tend to rotate therewith around the second rotation axis T, intercepting in the movement thereof one of the two first reaction elements 51, 52, depending on the direction in which it should rotate. However, once the first centering element 53 encounters one of the two first reaction elements 51, 52, two scenarios can occur. A first scenario occurs in the case in which the first centering element 53 is moved against one of the two first reaction elements 51, 52, with a first force F1, which is lower than the first reaction force Fr1 exerted by the corresponding first reaction element 51, 52.

In such a case, since the first force F1 is lower than the first reaction force Fr1, the first centering element 53 cannot rotate further around the second rotation axis T, being blocked in position by the corresponding first reaction element 51, 52.

In other words, in such a first case the first reaction elements 51, 52 define stops for the movement of the rotatable portion 43 around the second rotation axis T.

Differently, in accordance with the second scenario, this occurs in the case in which the first centering element 53 is moved against one of the two first reaction elements 51, 52, with a second force F2, which is greater than the first reaction force Fr1 exerted by the corresponding first reaction element 51, 52.

Such a second force F2 can be present, for example, in the case in which the tool encounters a portion of excess material on the piece 100, and therefore in particular a deviation of the piece 100 from an ideal profile.

In such a case, since the second force F2 is greater than the first reaction force Fr1, the first centering element 53 continues its rotation around the second rotation axis T, causing the plying, preferably elastic, of the corresponding first reaction element 51, 52 along the first movement direction Y.

Therefore, in such a second case the first reaction elements 51, 52 allow the movement of the rotatable portion 43 around the second rotation axis T, and preferably cushion it.

Furthermore, operationally at the end of the machining of the piece 100, or at the end of the application of the second force F2 (for example once the portion of excess material has passed), the first reaction element 51, 52 brings the first centering element 53 back to the initial position, definable as the zero position.

Advantageously, the first reaction elements 51, 52 act as elastic elements, i.e. elements that are deformable under a given stress (for example for forces F2 greater than the preset first reaction force Fr1), and which automatically return to their initial position once the load is removed. Advantageously, the aforesaid first reaction elements 51, 52 are configured to automatically and autonomously return the first centering element 53 to the initial position, i.e. without the application of external stresses or loads. In other words, the first reaction elements 51, 52 advantageously act as gas springs.

Thereby, the first reaction elements 51, 52 allow the first centering element 53 to always be brought back to the initial position, i.e. to a position that can be defined as "zero", so that its position is always defined and precise during the machining of the piece, and can change (thanks to the pliability of the first reaction elements 51, 52 along the first movement direction Y) only in the case of deviations in the piece to be machined (portions of excess material, etc.).

The first centering element 53 is interposed to size, abuttingly, between the two first reaction elements 51, 52. Preferably, the first centering element 53 is not fixed to the first reaction elements 51, 52, and can be moved from the initial position only following a reaction force exerted by the piece 100 to be machined. Therefore, unless forced by the presence of excess material or the like, the first centering element 53 will not rotate about the second rotation axis T. Advantageously, the compensation means 5 are of the passive type, i.e. they react, plying, if forced by the first centering element 53, to then autonomously return to the initial position, and are not configured to move the first centering element 53 to other intermediate positions other than the initial one.

It is thereby possible to obtain an extremely simple and economical robot assembly, without sacrificing precision of use.

Thereby, the first centering element 53 is maintained in the initial position, the zero position, where it is susceptible to being subjected to two opposite reaction forces, preferably equal in magnitude to each other.

Therefore, in such a case the first centering element 53 does not rotate around the second rotation axis T in the case of the first scenario described above, allowing a stable and defined position to be maintained during the machining of the piece 100, which corresponds to the initial zero position.

Advantageously, each first reaction element 51, 52 of the first compensation means 5 comprises a corresponding jacket 510, 520, preferably external, and a corresponding cylinder 511, 521, preferably internal. Preferably, the cylinder 511, 521 is a pneumatic cylinder.

Advantageously, the first reaction elements 51, 52 are single-acting cylinders, that is, they can be moved pneumatically in only one direction, as better explained below, and not also in the opposite direction, where they can move only if solicited by an external force.

Advantageously, the jackets 510, 520 of the two first reaction elements 51, 52 are fixed on the outer face of the support bracket 54, preferably on the opposite outer faces of the two prongs. Therefore, advantageously, each prong of the support bracket 54 is provided with a through opening, which slidably houses the cylinder 511, 521 of the corresponding first reaction element 51, 52.

Advantageously, the cylinder 511, 521 is extended along the first movement direction Y and is slidable within the jacket, along the first movement direction Y, which is preferably orthogonal to the prongs of the support bracket 54.

Advantageously, the cylinders 511, 521 are movable along the aforesaid first movement direction Y, between a stop position, in which it is placed abuttingly against a stop wall 512, 522 of the corresponding jacket 510, 520, and several compensation positions, in which it is placed spaced from the stop wall 512, 522 of the respective jacket 510, 520.

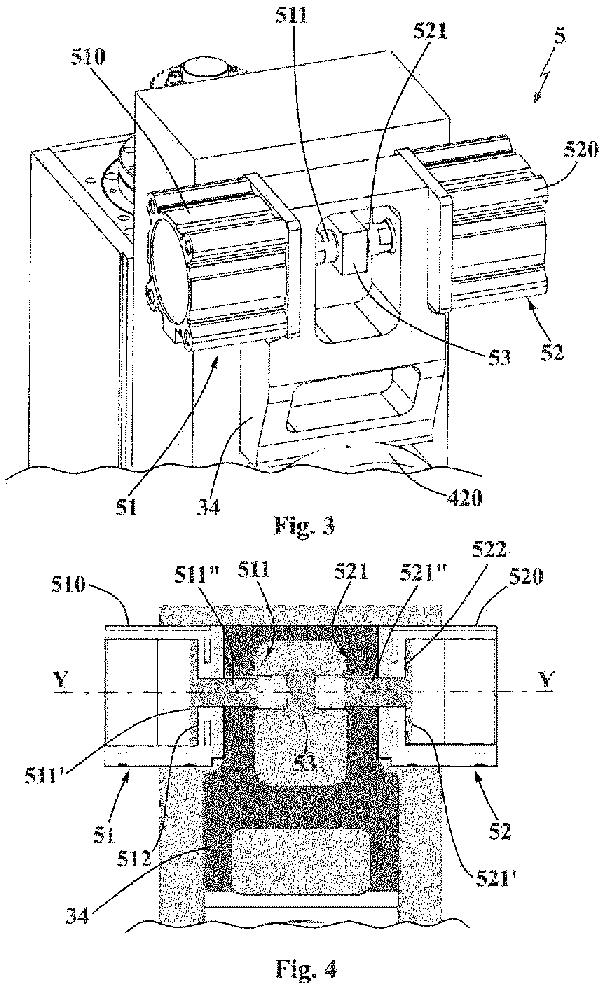

Advantageously, with both cylinders in the stop position the first centering element 53 is placed in the initial position, as shown for example in Figure 4.

In more detail, each jacket 510, 520 internally defines a chamber which is delimited by two opposite walls, i.e. by an end wall, and an opposite stop wall 512, 522, which faces the stop wall of the other jacket 510, 520.

Each cylinder 511, 521 advantageously comprises a piston 511', 521' slidably mounted within a corresponding jacket 510, 520, and a rod 511", 521", fixed to the corresponding piston 511', 521', and which protrudes outside the jacket 510, 520, to abut against the first centering element 53, as visible in Figure 4.

Advantageously, the piston 511', 521' separates the chamber of the jacket 510, 520 into two half-chambers, and in particular into a loading half-chamber, within which a pressurized fluid (preferably air) is susceptible to being loaded, and a discharge half-chamber, which is preferably connected to the external environment.

In particular, each cylinder 511, 521 is forced into the stop position following the loading of the pressurized fluid into the loading half-chamber, at a preset pressure which determines the first reaction force Fr1 of the first reaction element 51, 52. In such a position, the cylinder 511, 521 is advantageously in a stable position, until the action of the first centering element 53 causes the piston 511', 521' to slide along the chamber, towards the end wall, with a consequent increase in the pressure of the fluid in the loading half-chamber.

In particular, each cylinder 511, 521 is extended between two opposite ends, of which a first end is placed inside the corresponding jacket 510, 520, and an opposite second end, the head, is placed outside the jacket 510, 520, and preferably abutting against the first centering element 53. Advantageously, the piston of each cylinder 511, 521 is placed abuttingly against the stop wall of the jacket 510, 520 when the cylinder 511, 521 is in the stop position. Thereby, the cylinder 511, 521 is prevented from translating along the first movement direction Y, in a first direction oriented towards the other cylinder 511, 521, while the translation of the cylinder 511, 521 along the first movement direction Y in the opposite direction remains permitted, away from the other cylinder 511, 521 and therefore with the piston moving towards the end wall of the jacket 510, 520.

In other words, advantageously, the stop wall of each said jacket defines a mechanical stop to the movement of the corresponding cylinder 511, 521, along the first movement direction Y, towards the cylinder 511, 521 of the opposite first reaction element 51, 52.

Advantageously, thereby the cylinders 511, 521 are not configured to move the first centering element 53 towards the opposite cylinder 511, 521.

This means that the first centering element 53 cannot be moved by the cylinders 511, 521 when it is in the initial position, but can at most be returned to such a position once it has moved, as described above.

Advantageously, when the first centering element 53 moves from the initial position against one of the two said first reaction elements 51, 52, causing it to ply from the stop position to one of the aforesaid compensation positions, the other first reaction element 51, 52 remains in the stop position, separating from the centering element.

In other words, the first centering element 53 is spaced from one of the two reaction elements 51, 52 while compressing the other, causing it to ply along the first movement direction Y. Therefore, the subsequent return of the first centering element 53 to the initial position is due only to the first reaction element 51, 52 which has been moved by the first centering element 53, while the other first reaction element 51, 52 acts as a stop when the first centering element 53 returns to the initial position, interposed abuttingly between the two first reaction elements 51, 52.

Advantageously, the first centering element 53 is a plate, for example metal, which is fixed to the rotatable portion 43, and preferably is integral with the latter.

In particular, the first centering element 53 is provided with two opposite faces, preferably planar and parallel to each other, each of which is placed abutting against the second end, the head, of a corresponding cylinder 511, 521.

Preferably, the two faces of each first centering element 53 are placed orthogonally to the first movement direction Y of the two cylinders 511, 521, and therefore preferably parallel to the prongs of the support bracket 54.

Advantageously, the rotary table 3 is slidably mounted on the support structure 2, along a slide direction X.

In more detail, the rotary table 3 has a first portion 34, rotatably mounted on the support structure 2, and a second portion 35, which comprises the support surface 30, and which is slidably mounted on the first portion 34, along the aforesaid slide direction X.

Advantageously, the first portion 34 comprises the rotary table 3 comprises at least two guide rails 340, which are extended parallel to the slide direction X, and the second portion 35 of the rotary table 3 is provided with at least two sliding blocks 31, which are slidably mounted on respective guide rails 340 of the first portion 34, to guide the movement of the aforesaid first portion 34 of the rotary table 3 along the slide direction X.

Advantageously, the assembly 1 comprises second compensation means 6, which are mounted on the first portion 34 and on the second portion 35 of the rotary table 3, and are configured to compensate for the movement of the second portion 35 of the rotary table 3 with respect to the first portion 34, along the slide direction X.

Advantageously, the second compensation means 6 are functionally similar to the first compensation means 5 described above.

In more detail, the second compensation means 6 are configured to exert a second, predetermined reaction force on the second portion 35 of the rotary table 3, so as to keep the aforesaid second portion 35 stopped in position with respect to the first portion 34 during the normal machining of the piece 100. In other words, in such a situation the second portion 35 does not translate along the slide direction X with respect to the first portion 34.

Preferably, the second compensation means 6 are configured to exert a second reaction force Fr2 comprised between 50 and 300 kg, and even more preferably between 100 and 200 kg.

At the same time, the aforesaid second compensation means 6 allow a compensatory movement of the second portion 35 with respect to the first portion 34 (along the slide direction X), if the operating pressure exerted by the tool on the surface of the piece 100 exceeds a threshold pressure, which preferably corresponds to the predetermined force exerted by the second compensation means 6 on the second portion 35.

For example, the aforesaid second compensation means 6 allow the movement of the second portion 35 with respect to the first portion when the pressure exceeds the set working pressure, which can be for example comprised between 1 and 6 bar, depending on the machining and the point of the piece 100 to be machined.

In fact, as explained above, the piece 100 to be machined is integral, at least during the machining of the tool, with the second portion 35 of the rotary table 3, which comprises the support surface 30. Therefore, when the tool encounters an oversized portion of material in its predefined machining path (for example, where there is excess material), the second portion 35 of the rotary table 3 tends to translate along the slide direction X with respect to the first portion 34. The second compensation means 6 advantageously allow such movement when the pressure between the surface of the piece 100 and the tool exceeds a threshold value, and therefore when the irregular portion of the piece 100 is actually too large, in order to avoid damaging the tool. Advantageously, the second compensation means 6 comprise two second reaction elements 61, 62, which are mounted on the first portion 34 of the rotary table 3, and are placed opposite and spaced from each other.

Advantageously, the second compensation means 6 further comprise a second centering element 63, which is fixed to the second portion 35 of the rotary table 3 and is interposed between the two second reaction elements 61, 62.

Advantageously, the two second reaction elements 61, 62 are pliable along a second movement direction X', following the movement of the second portion 35 of the rotary table 3 along the slide direction X, which second movement direction X' is preferably parallel to the slide direction X.

Preferably, the second movement direction X' is orthogonal to the first movement direction Y. Advantageously, the two second reaction elements 61, 62 are configured to exert a second reaction force Fr2 on the second centering element 63, which is oriented parallel to the second movement direction X'.

Therefore, the second centering element 63, which is fixed to the second portion 35 of the rotary table 3, will tend to translate therewith along the second movement direction X', intercepting in the movement thereof one of the two second reaction elements 61, 62, depending on the direction in which it should translate.

However, once the second centering element 63 encounters one of the two second reaction elements 61, 62, two scenarios can occur. A first scenario occurs when the second centering element 63 is moved against one of the two second reaction elements 61, 62, with a third force F3, which is lower than the second reaction force Fr2 exerted by the corresponding second reaction element 61, 62.

**In** such a case, since the third force F3 is lower than the second reaction force Fr2, the second centering element 63 cannot translate further along the second movement direction X', being blocked in position by the corresponding second reaction element 61, 62.

Differently, in accordance with the second scenario, this occurs in the case in which the second centering element 63 is moved against one of the two second reaction elements 61, 62, with a fourth force F4, which is greater than the second reaction force Fr2 exerted by the corresponding second reaction element 61, 62.

In such a case, since the fourth force F4 is greater than the second reaction force Fr2, the second centering element 63 continues its translation along the second movement direction X', causing the plying of the corresponding second reaction element 61, 62 along the second movement direction X'.

Furthermore, operationally at the end of machining the piece 100, the second reaction element 61, 62 advantageously brings the second centering element 63 back to the initial position, definable as the zero position.

Advantageously, each second centering element 63 is interposed to size, abuttingly, between the corresponding two second reaction elements 61, 62.

Thereby, the second centering element 63 is maintained in the initial position, the zero position, being interposed to size between the two second reaction elements 61, 62 where it is subjected to two opposite reaction forces, preferably equal in magnitude to each other.

Therefore, in such a case the second centering element 63 does not perform any translation along the second movement direction X' in the case of the first scenario described above, allowing a stable and defined position to be maintained during the machining of the piece 100, which corresponds to the initial zero position.

Advantageously, each second reaction element 61, 62 of the second compensation means 6 comprises a jacket 610, 620, preferably external, and a cylinder 611, 621, preferably internal. Preferably, the cylinders 611, 621 of the second reaction elements 61, 62 are pneumatic cylinders.

Advantageously, the cylinders 611, 621 of the second reaction elements 61, 62 are extended along the second movement direction X' and slide within the corresponding jacket 610, 620, along the second movement direction X'.

In particular, each cylinder 611, 621 is extended between two opposite ends, of which a first end is placed inside the corresponding jacket 610, 620, and an opposite second end, the head, is placed outside the jacket 610, 620, and preferably abutting against the second centering element 63.

Advantageously, the second centering element 63 is a plate, for example metal, which is fixed to the second portion 35 of the rotary table 3, and preferably is integral with the latter.

In particular, the second centering element 63 is provided with two opposite faces, preferably planar and parallel to each other, each of which is placed abutting against the second end, the head, of a corresponding cylinder 611, 621.

Preferably, the two faces of each second centering element 63 are placed orthogonally to the second movement direction X' of the two cylinders 611, 621.

Advantageously, in the same manner as described above for the first compensation means 5, the second compensation means 6 are also of the passive type, that is, they react, plying, if forced by the second centering element 63, and then return autonomously to the initial position, and are not configured to move the second centering element 63 to other intermediate positions other than the initial one.

Advantageously, the second reaction elements 61, 62 act as elastic elements, i.e. elements that are deformable under a given stress and that automatically return to the initial position once the load is removed, and are preferably configured to automatically and autonomously return the second centering element 63 to the initial position, i.e. without the application of external stresses or loads. In other words, the second reaction elements 61, 62 advantageously act as gas springs.

Thereby, the second reaction elements 61, 62 advantageously allow the second centering element 63, and therefore the piece 100 to be machined, to always be returned to the initial position, i.e. to a position that can be defined as "zero", so that its position is always defined and precise during machining.

Advantageously, the second reaction elements 61, 62 are single-acting cylinders, that is, they can be moved pneumatically in only one direction, as better explained below, and not also in the opposite direction, where they can move only if solicited by an external force.

It is thereby possible to guarantee a high machining speed of the piece 100 to be machined, reducing the risks of wear or damage to the machining tool and the piece, thanks to the presence of distinct compensation means 5, 6 which allow a movement, preferably elastic, along two orthogonal directions in the event of excessively high forces acting on the piece or the tool.

The invention thus conceived achieves the envisaged objects.

## Claims

1. Articulated robot assembly for machining pieces (100), comprising:
- a support structure (2);
- at least one rotary table (3), which is rotatably mounted on said support structure (2), around a first rotation axis (R), and on which a piece (100) to be machined is intended to be placed;
- a robot (4), which is provided with a support base, intended to be placed on the ground, and an articulated arm (41), which is mounted on said support base and comprises:
- a main portion (42), mounted in an articulated manner on said support base;
- a rotatable portion (43), which is rotatably mounted on said main portion (42), around a second rotation axis (T);
- a machining tool, mounted on the rotatable portion (43) of said articulated arm (41), and actuatable in rotation in order to machine the piece (100) mounted on said rotary table (3);
- first compensation means (5), which are mounted on said robot (4), between said main portion (42) and said rotatable portion (43), in order to compensate for the movement of said rotatable portion (43) with respect to said main portion (42) around said second rotation axis (T), and comprise:
- two first reaction elements (51, 52), which are mounted on said main portion (42) and are placed opposite and spaced from each other; and
- a first centering element (53), fixed to said rotatable portion (43) and interposed between said two first reaction elements (51, 52);
wherein said two first reaction elements (51, 52) are pliable along a first movement direction (Y) following the rotation of said rotatable portion (43) around said second rotation axis (T), and are configured to exert a first reaction force (Fr1) on said first centering element (53), predetermined, which is oriented parallel to said first movement direction (Y);
said assembly being **characterized in that** the first centering element (53) of said compensation means (5) is interposed to size, abuttingly between said two first reaction elements (51, 52), to be maintained in an initial position;
and **in that** said first centering element (53) is movable from said initial position against said first reaction elements (51, 52), which are susceptible to plying along said first movement direction (Y), and are configured to return said first centering element (53) to said initial position.

2. Assembly according to claim 1, **characterized in that** each first reaction element (51, 52) of said first compensation means (5) comprises a jacket (510, 520) and a cylinder (511, 521), preferably pneumatic, which is extended along said first movement direction (Y) and is slidable within said jacket, along said first movement direction (Y), between:
- a stop position, in which it is placed abuttingly against a stop wall (512, 522) of said jacket (510, 520); and
- multiple compensation positions, in which it is placed spaced from the stop wall (512, 522) of said jacket (510, 520);
wherein with both said two cylinders (511, 521) in said stop position, said first centering element (53) is placed in said initial position.

3. Assembly according to claim 2, **characterized in that** the stop wall of each said jacket (510, 520) defines a mechanical stop to the movement of the corresponding said cylinder (511, 521), along said first movement direction (Y), towards the cylinder (511, 521) of the opposite said first reaction element (51, 52).

4. Assembly according to any one of the preceding claims, **characterized in that** said first centering element (53) is movable from said initial position against one of the two said first reaction elements (51, 52), which is configured to ply from said stop position to a compensation position, while the other first reaction element (51, 52) remains in said stop position, separating from said first centering element (53).

5. Assembly according to any one of the preceding claims, **characterized in that** said rotatable portion (43) is idly mounted on said main portion (42), around said second rotation axis (T).

6. Assembly according to any one of the preceding claims, **characterized in that** said rotary table (3) comprises a first portion (34), rotatably mounted on said support structure (2), and a second portion (35), which is slidably mounted on said first portion (34) along a slide direction (X); wherein said assembly (1) comprises second compensation means (6), which are mounted on said first portion (34) and said second portion (35), and are configured to compensate for the movement of the second portion (35) of said rotary table (3) with respect to said first portion (34), along said slide direction (X).

7. Assembly according to claim 6, **characterized in that** said first portion (34) comprises at least two guide rails (340), which are extended parallel to said slide direction (X), and said second portion (35) is provided with at least two sliding blocks (350), which are slidably mounted on respective guide rails (340) of said first portion (34), in order to guide the movement of said second portion (35) along said slide direction (X).

8. Assembly according to claim 6 or 7, **characterized in that** said second compensation means (6) comprise:
- two second reaction elements (61, 62), which are mounted on the first portion (34) of said rotary table (3) and are placed opposite and spaced from each other; and
- a second centering element (63), fixed to the second portion (35) of said rotary table (3) and interposed between said two second reaction elements (61, 62);
wherein said two second reaction elements (61, 62) are pliable along a second movement direction (X') following the movement of said second portion (35) along said slide direction (X), and are configured to exert a reaction force on said second centering element (63), which is oriented parallel to said second movement direction (X').

9. Assembly according to claim 8, **characterized in that** said second centering element (63) is interposed to size, abuttingly between said two second reaction elements (61, 62).

10. Assembly according to claim 8 or 9, **characterized in that** each second reaction element (61, 62) of said second compensation means (6) comprises a jacket and a cylinder, preferably pneumatic, which is extended along said second movement direction (X') and is slidable within said jacket, along said second movement direction (X').
